# EUROPEAN PATENT SPECIFICATION

(11) **EP 3 988 066 B1**
(45) Date of publication and mention of the grant of the patent: **07.08.2024**
(21) Application number: 21197015.7
(22) Date of filing: 16.09.2021
(51) Int. Cl.: A61G 3/08, B60P 7/08

(54) **A VEHICLE COMPRISING A FLOOR WHICH IS EQUIPPED WITH AT LEAST ONE RETRACTOR BELT**
FAHRZEUG MIT EINEM BODEN MIT MINDESTENS EINEM AUFROLLGURT
VÉHICULE COMPRENANT UN PLANCHER QUI EST ÉQUIPÉ D'AU MOINS UN ENROULEUR DE CEINTURE

(30) Priority: 20.10.2020 NL 2026707
(43) Date of publication of application: 27.04.2022
(73) Proprietor: Tribus Beheer B.V., 3543 AC Utrecht (NL)
(72) Inventor: DUNNINK, Bram, 3543 AC Utrecht (NL)
(74) Representative: van Breda, Jacobus

(56) References cited:
- DE-U1- 202013 003 058
- US-A1- 2014 369 778

## Description

The invention relates to a vehicle comprising a floor which is equipped with at least one retractor belt for securing an objects' position on top of the floor. The vehicle may for instance be tailored for transportation of a person or persons sitting in wheelchairs, wherein the vehicle comprises a floor equipped with at least one retractor belt for securing the wheelchair's position on top of the floor.

Such a vehicle is known from US2014/0369778 and is known from daily use for transportation of disabled persons sitting in wheelchairs, wherein the retractor belts are required to securely maintain the position of the wheelchairs during transport. The safety of this provision is secured in practice by the responsible driver of the vehicle checking that indeed all wheelchairs are attached to the appropriate retractor belts.

There is a need to make checking of the stable positioning of the wheelchairs more easy, so as to reduce the tasks and duties of the driver of the vehicle.

To that end according to the invention as defined by the appended claims it is proposed that the retractor belt is guided over a compressible actuator that is provided with an unloaded position and a compressed loaded position, and arranged to actuate a switch when placed in the compressed loaded position, which compressible actuator is mounted in the floor between a guide roller for the retractor belt and a tensioned take-up and release roller for the retractor belt, wherein both the guide roller and the take-up and release roller are mounted in the floor. In this manner the construction with the compressible actuator and the switch and the mentioned rollers are out of sight within the floor and protected against unintentional damage caused by operations on top of the floor. The switch can then be used to inform the driver that the concerning object or wheelchair is safely positioned.

The actuator is suitably a compressible and upward bended plate with an upper bend, wherein the upper bend of the upward bended plate is in contact with the retractor belt, which plate is further provided with a notch protruding downwardly from the upward bended plate, and which notch engages the switch, wherein the notch is placed distant from an end of the compressible and upward bended plate, which end of the plate is fixed within the floor so as to arrange that upon the retractor belt compressing the upward bended plate, the notch will move away from the fixed end of the plate and actuate the switch.

The invention will hereinafter be further elucidated with reference to the drawing of an exemplary embodiment of the construction according to the invention that is not limiting as to the appended claims. In particular the invention is not restricted to the application of the vehicle with which persons in wheelchairs are transported. The invention also applies when instead of persons in wheelchairs, lifeless objects are transported that have to be secured against movement in the vehicle. The following example therefore only serves to elucidate the claims that are following this elucidation.

In the drawing:
- figures 1A/1B shows an isometric view and a cross-sectional view, respectively of a floor of an vehicle according to the invention with an unsecured wheelchair;
- figures 2A/2B shows an isometric view and a cross-sectional view, respectively of a floor of an vehicle according to the invention with a secured wheelchair;
- figure 3 shows in an isometric view the details of a retractor belt mounted in a floor of a vehicle according to the invention;
- figure 4 shows schematically in a side view a non-compressed actuator plate as used in the invention; and
- figure 5 shows schematically in a side view a compressed actuator plate as used in the invention.

Whenever in the figures the same reference numerals are applied, these numerals refer to the same parts.

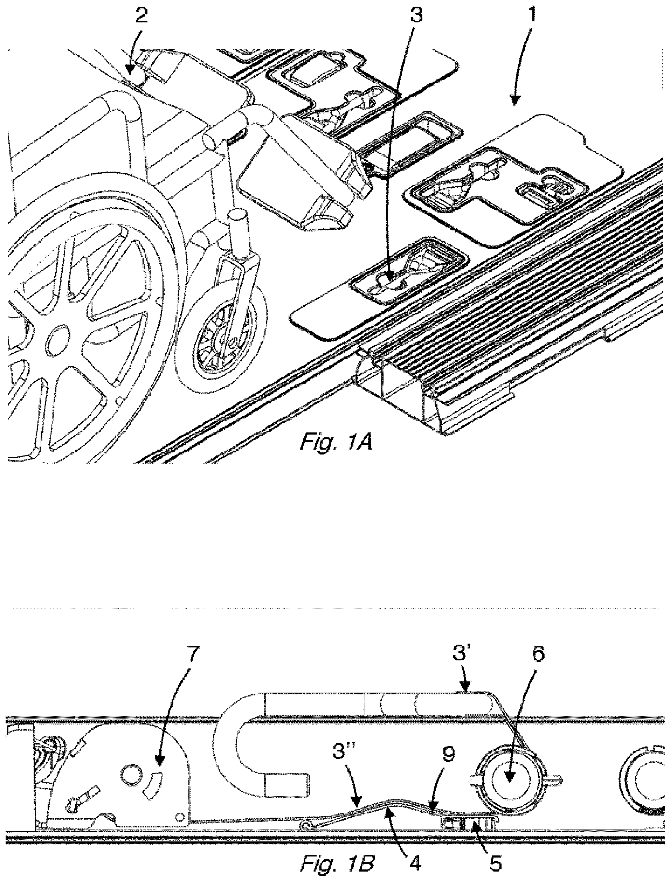

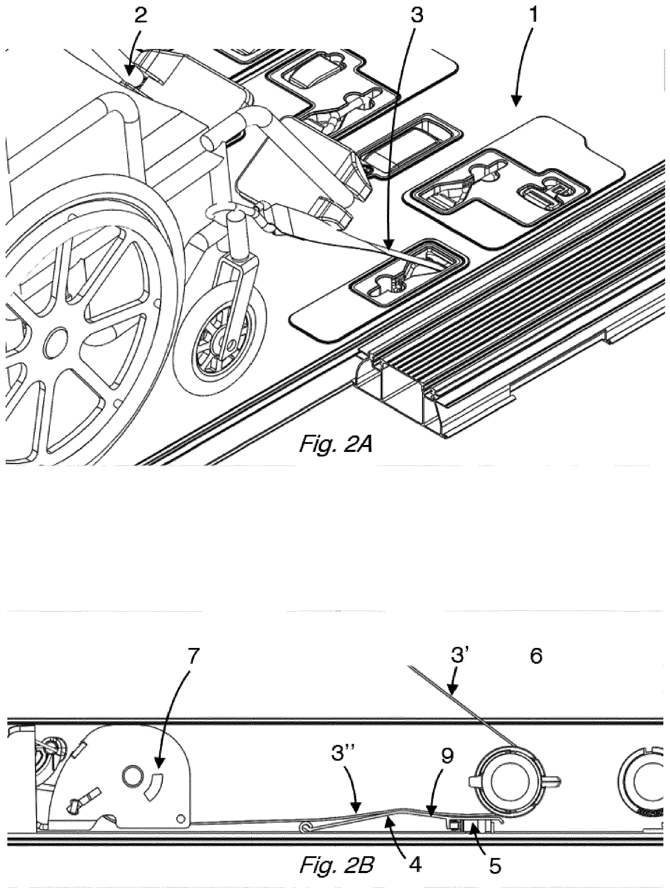

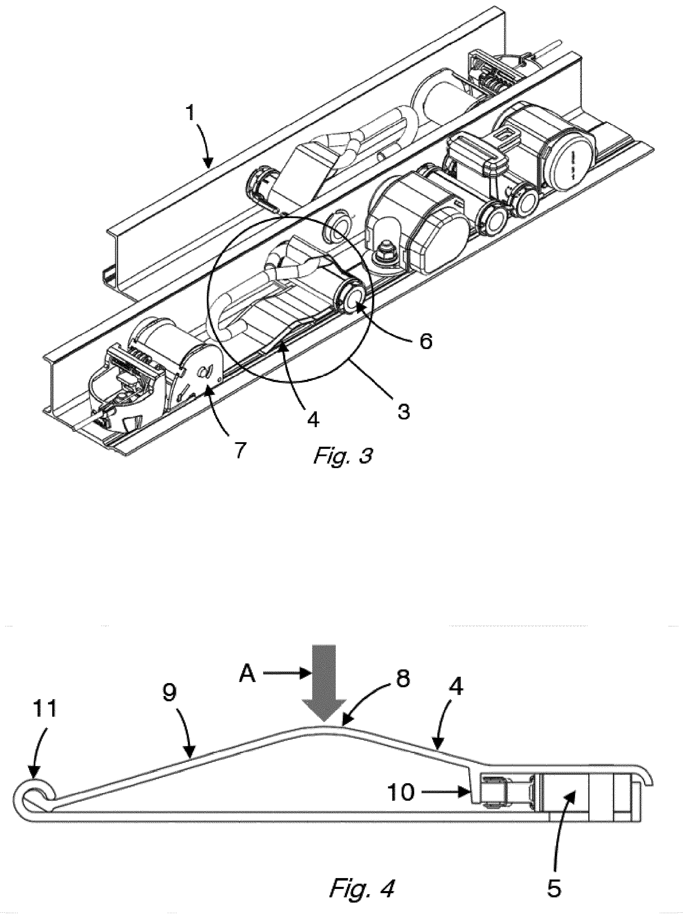

In figures 1A/1B and figures 2A/2B a floor 1 is shown of a vehicle tailored for transportation of a person (or persons) sitting in a wheelchair 2. The floor 1 is equipped with at least one retractor belt 3 for securing the wheelchair's position on top of the floor 1. In figures 1A/1B the retractor belt 3 is not in use, whereas figures 2A/2B shows one retractor belt 3 being in use and connected to the wheelchair, wherein a first part 3' of the at least one retractor belt 3 is arranged above the floor 1 and a second part 3" of the at least one retractor belt 3 is arranged within the floor 1. This is most clearly shown in the cross-sectional view of figure 2B and the view that is provided by figure 3. It is however equally possible to mount the retractor belt 3, and the actuator 4 to be discussed hereinafter as well as the switch 5, all on top of the floor 1.

Turning back to the depicted embodiment, particularly figure 2B shows that the second part 3" of the at least one retractor belt 3 is guided over a compressible actuator 4. In figure 4 the actuator 4 is shown separately from the retractor belt 3 in an unloaded position. This corresponds to the situation of the actuator 4 shown in figures 1A/1B.

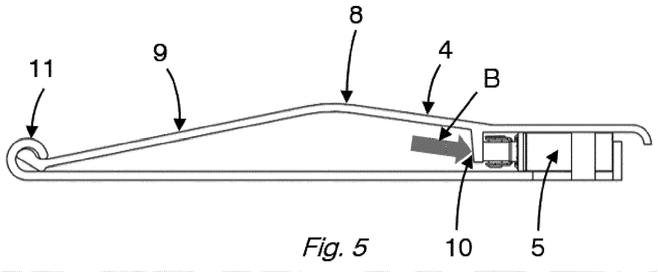

Without showing the retractor belt 3, figure 5 shows the same actuator 4 in a compressed loaded position. This corresponds to the situation of the actuator 4 shown in figures 2A/2B.

In figure 4 and figure 5 also a switch 5 is shown. The actuator 4 is arranged to actuate the switch 5 when placed in the compressed loaded position as depicted in figures 2A/2B and figure 5.

It follows further from figure 1B and figure 2B as well as figure 3 that the compressible actuator is in this embodiment mounted in the floor 1 between a guide roller 6 for the retractor belt 3 and a tensioned take-up and release roller 7 for the retractor belt 3, wherein both the guide roller 6 and the take-up and release roller 7 are mounted in the floor 1. This is however not essential, other solutions are also feasible.

Turning back to figures 4 and 5 it is shown that the actuator 4 is a compressible and upward bended plate 9 with an upper bend 8. The upper bend 8 of the upward bended plate 9 is in contact with the retractor belt 3 as is shown in figure 1B and figure 2B. The plate 9 is further provided with a notch 10 protruding downwardly from the upward bended plate 9. The notch 10 is placed distant from an end 11 of the compressible and upward bended plate 9, which end 11 of the plate 9 is fixed to the floor 1 so as to arrange that upon the retractor belt 3 compressing the upward bended plate 9 as symbolized by the arrow A in figure 4, the notch 10 will move away from the fixed end 11 of the plate 9 and actuate the switch 5 as symbolized by arrow B in figure 5.

Although the invention has been discussed in the foregoing with reference to an exemplary embodiment of the vehicle of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. A vehicle comprising a floor (1) which is equipped with at least one retractor belt (3) for securing an objects' position on top of the floor (1), **characterized in that** the retractor belt (3) is guided over a compressible actuator (4) that is provided with an unloaded position and a compressed loaded position, and arranged to actuate a switch (5) when placed in the compressed loaded position, which compressible actuator (4) is mounted in the floor (1) between a guide roller (6) for the retractor belt (3) and a tensioned take-up and release roller (7) for the retractor belt (3), wherein both the guide roller (6) and the take-up and release roller (7) are mounted within the floor (1).

2. The vehicle according to claim 1, **characterized in that** a first part (3') of the at least one retractor belt (3) is arranged above the floor (1) and a second part (3") of the at least one retractor belt (3) is arranged within the floor (1), and that the second part (3") of the at least one retractor belt (3) is guided over the compressible actuator (4) .

3. The vehicle according to claim 1 or **2,characterized in that** the actuator (4) is a compressible and upward bended plate (9) with an upper bend (8), wherein the upper bend (8) of the upward bended plate (9) is in contact with the retractor belt (3), which plate (9) is further provided with a notch (10) protruding downwardly from the upward bended plate (9), and which notch (10) engages the switch (5), wherein the notch (10) is placed distant from an end (11) of the compressible and upward bended plate (9), which end (11) of the plate (9) is fixed to the floor (1) so as to arrange that upon the retractor belt (3) compressing the upward bended plate (9), the notch (10) will move away from the fixed end (11) of the plate (9) and actuate the switch (5) .

## Patentansprüche

1. Fahrzeug, das einen Boden (1) aufweist, der mit zumindest einem Aufrollgurt (3) zum Sichern der Position eines Objekts oben auf dem Boden (1) ausgestattet ist, **dadurch gekennzeichnet, dass** der Aufrollgurt (3) über einen komprimierbaren Aktuator (4) geführt wird, der mit einer unbelasteten Position und einer komprimierten, belasteten Position versehen ist, und so angeordnet ist, dass er einen Schalter (5) betätigt, wenn er sich in der komprimierten, belasteten Position befindet, wobei der komprimierbare Aktuator (4) in dem Boden (1) zwischen einer Führungsrolle (6) für den Aufrollgurt (3) und einer gespannten Aufwickel- und Freigaberolle (7) für den Aufrollgurt angebracht ist, wobei sowohl die Führungsrolle (6) als auch die Aufwickel- und Freigaberolle (7) innerhalb des Bodens (1) montiert sind.

2. Fahrzeug nach Anspruch 1, **dadurch gekennzeichnet, dass** ein erster Teil (3') des zumindest einen Aufrollgurts (3) oberhalb des Bodens (1) angeordnet ist und ein zweiter Teil (3") des zumindest einen Aufrollgurts (3) innerhalb des Bodens (1) angeordnet ist, und dass der zweite Teil (3") des zumindest einen Aufrollgurts (3) über den komprimierbaren Aktuator (4) geführt wird.

3. Fahrzeug nach Anspruch 1 oder 2, **dadurch gekennzeichnet, dass** der Aktuator (4) eine komprimierbare und nach oben gebogene Platte (9) mit einer oberen Biegung (8) ist, wobei die obere Biegung (8) der nach oben gebogenen Platte (9) mit dem Aufrollgurt (3) in Kontakt steht, wobei die Platte (9) weiterhin mit einer Aussparung (10) versehen ist, die von der nach oben gebogenen Platte (9) nach unten vorsteht, und wobei die Aussparung (10) in den Schalter (5) eingreift, wobei die Aussparung (10) von einem Ende (11) der komprimierbaren und nach oben gebogenen Platte (9) beabstandet angeordnet ist, wobei das Ende (11) der Platte (9) an dem Boden (1) befestigt ist, um so zu veranlassen, dass sich die Aussparung (10), wenn der Aufrollgurt (3) die nach oben gebogene Platte (9) komprimiert, von dem festen Ende (11) der Platte (9) wegbewegt und den Schalter (5) betätigt.

## Revendications

1. Véhicule comprenant un plancher (1) qui est équipé d'au moins une courroie enrouleuse (3) pour sécuriser une position d'objets sur le dessus du plancher (1), **caractérisé en ce que** la courroie enrouleuse (3) est guidée sur un actionneur compressible (4) qui est pourvu d'une position déchargée et d'une position chargée comprimée, et agencé pour actionner un commutateur (5) lorsqu'il est placé dans la position chargée comprimée, lequel actionneur compressible (4) est monté dans le plancher (1) entre un rouleau de guidage (6) pour la courroie enrouleuse (3) et un rouleau de réception et de libération sous tension (7) pour la courroie enrouleuse (3), dans lequel le rouleau de guidage (6) et le rouleau de réception et de libération (7) sont tous deux montés à l'intérieur du plancher (1).

2. Véhicule selon la revendication 1, **caractérisé en ce qu'**une première partie (3') de l'au moins une courroie enrouleuse (3) est disposée au-dessus du plancher (1) et une seconde partie (3") de l'au moins une courroie enrouleuse (3) est disposée à l'intérieur du plancher (1), et **en ce que** la seconde partie (3") de l'au moins une courroie enrouleuse (3) est guidée sur l'actionneur compressible (4).

3. Véhicule selon la revendication 1 ou 2, **caractérisé en ce que** l'actionneur (4) est une plaque compressible et courbée vers le haut (9) avec un coude supérieur (8), dans lequel le coude supérieur (8) de la plaque courbée vers le haut (9) est en contact avec la courroie enrouleuse (3), laquelle plaque (9) est en outre pourvue d'une encoche (10) faisant saillie vers le bas depuis la plaque courbée vers le haut (9), et laquelle encoche (10) met en prise le commutateur (5), dans lequel l'encoche (10) est placée à distance d'une extrémité (11) de la plaque compressible et courbée vers le haut (9), laquelle extrémité (11) de la plaque (9) est fixée au plancher (1) de manière à prévoir que, lorsque la courroie enrouleuse (3) comprime la plaque courbée vers le haut (9), l'encoche (10) va s'éloigner de l'extrémité fixée (11) de la plaque (9) et actionner le commutateur (5).
